# EUROPEAN PATENT SPECIFICATION

(11) **EP 0 981 950 B1**
(45) Date of publication and mention of the grant of the patent: **14.03.2001**
(21) Application number: 98113624.5
(22) Date of filing: 22.07.1998
(51) Int. Cl.: A01G 9/10

(54) **Method for propagating phyllocacti**
Phyllokaktusvermehrungsverfahren
Méthode de multiplication des phyllocactus

(43) Date of publication of application: 01.03.2000
(73) Proprietor: Madsen, Kristian, 5270 Odense (DK)
(72) Inventor: Madsen, Kristian, 5270 Odense (DK)
(74) Representative: Roerboel, Leif

(56) References cited:
- EP-A- 0 074 636
- GB-A- 2 228 911
- "Plant Information" ORGANIC PLANT CARE, XP002089455 http://www.organicplantcare.com/B.HTML
- "Welcome to Organic Plant Care's on-line information center" ORGANIC PLANT CARE,28 April 1998, XP002089456 http://www.organicplantcare.com/2home.html
- DR. J. RAYMOND KESSLER JR.: "HOLIDAY CACTUS - Commercial Greenhouse Production" AUBURN UNIVERSITY,5 January 1998, XP002089457 http://www.ag.auburn.edu/landscape/Hcactus .htm
- R. T. POOLE, L. S. OSBORNE AND A. R. CHASE: "Holiday Cactus Production Guide" CENTRAL FLORIDA RESEARCH AND EDUCATION CENTER, XP002089458 http:/www.ifas.ufl.edu/~apkweb/folnotes/ho liday.htm
- "Commercial Foliage Crop Production Notes" CENTRAL FLORIDA RESEARCH AND EDUCATION CENTER,May 1998, XP002089459 http:/gnv.ifas.ufl.edu/~apkweb/folnotes/ht m

## Description

The present invention relates to a method for propagating Phyllocacti by using cuttings from a mother plant, said method being of the kind set forth in the preamble of claims 1 and 2.

### TECHNICAL FIELD

Up to the present moment, methods of the kind referred to have been carried out by planting tightly together sets of two or more cuttings in the earth or other growing substrate of a compartment. In the earth or growing substrate of the compartment, the leaves will strike root and develop into a new plant. To be saleable the plant must have three or four leaves, but they can be allowed to grow until they have from five to seven leaves in order to obtain cuttings for further propagation. In mass industrial production, this method has usually been carried out by planting the sets of cuttings, first into trays comprising a large number of compartments to allow a first stage of growing of the plant and thereafter to plant the sets over into a sales pot. Such a method is disclosed in "Holiday Cactus-Commercial Greenhouse Production", Aubum University, 5 January 1998.

Effective mass production including the use of automatic equipment which favours simple and effective solutions have led to a prior art method in which cuttings of a set are planted very tightly together. This tight planting is possible since the cuttings are single flat leaves that can be packed in parallel, since the new leaves sprouting off a cutting will not divert strongly. There was no awareness in the prior art that this way of propagating Phyllocacti includes disadvantages. It has now been realized that it despite the tight planting the prior art method is surprisingly not as space effective as the method according to the present invention. The tight planting can cause slow and incomplete development of the cuttings, some developing into dominant and other into weak small non-dominant plants, which leads to unsatisfactory end products.

### DISCLOSURE OF THE INVENTION

On the background of the above, it is the object of the present invention to provide a method of the kind referred to initially, with properties considerably more favourable than corresponding prior art methods. This object is achieved by proceeding in the manner set forth in the characterizing clause of claim 1 or 2. By proceeding in this manner, the cuttings are allowed to have enough space for optimum development. In a further embodiment of the method, a multiple-compartment tray is used for an intermediate growing step. Using a multiple-compartment tray makes the method especially useful in mass production. In yet another embodiment the method is carried out using semi-automatic or automatic equipment.

### BRIEF DESCRIPTION OF THE DRAWINGS

In the following detailed portion of the present description, the invention will be explained in more detail with reference to exemplary embodiments according to the invention as shown in the drawings, in which
Figure 1 shows a sales pot with the cuttings arranged according to the prior art method,
Figure 2 shows a multiple-compartment tray, and
Figures 3 and 4 show a sales pot with the cuttings arranged according to the present invention.

### DESCRIPTION OF THE PREFERRED EMBODIMENT

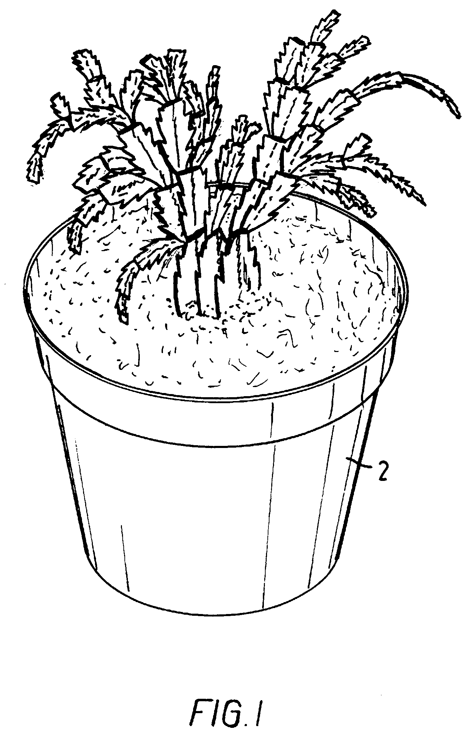

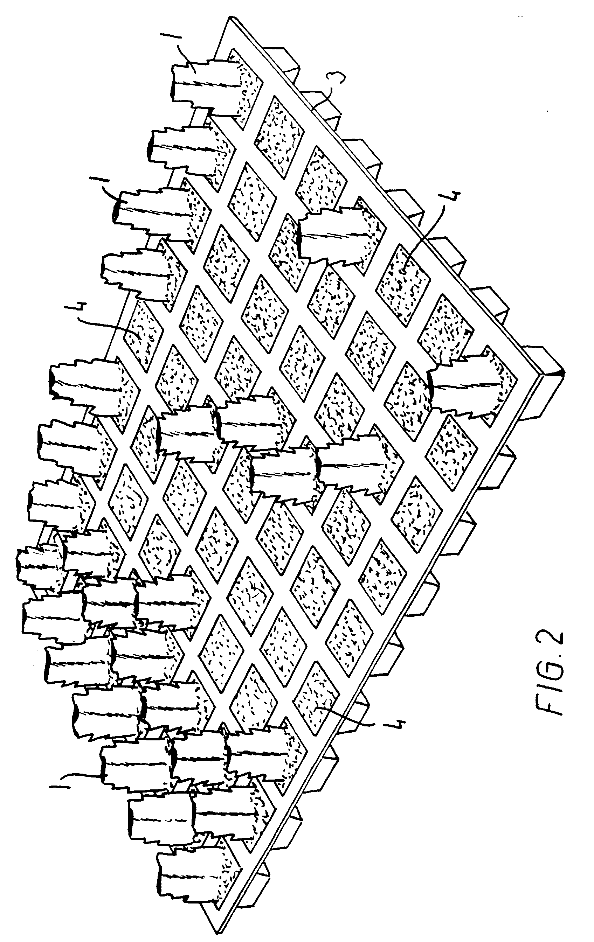

Figure 1 shows the cuttings 1 planted in the earth in the sales pot 2 arranged according to the prior art method centrally and closely together. The cuttings have been planted tightly together in a central area of the sales pot 2. Normally, the cuttings 1 have undergone a rooting and growing phase in a multiple-compartment tray as shown in Figure 2. The multiple-compartment tray 3 comprises a plurality of relatively small compartments 4. The space that is available for the cuttings 1 to strike root and grow in a compartment 4 is therefore limited. According to the prior-art method in this relatively small compartment 4, a set of two to three cuttings 1 is planted. The cuttings 1 are thus planted very close together. One of the problems encountered here is that the cuttings can be damaged during the planting step since they are pressed tightly together.

After the initial phase in the multiple-compartment tray 3, one set of cuttings is planted over into a sales pot 2.

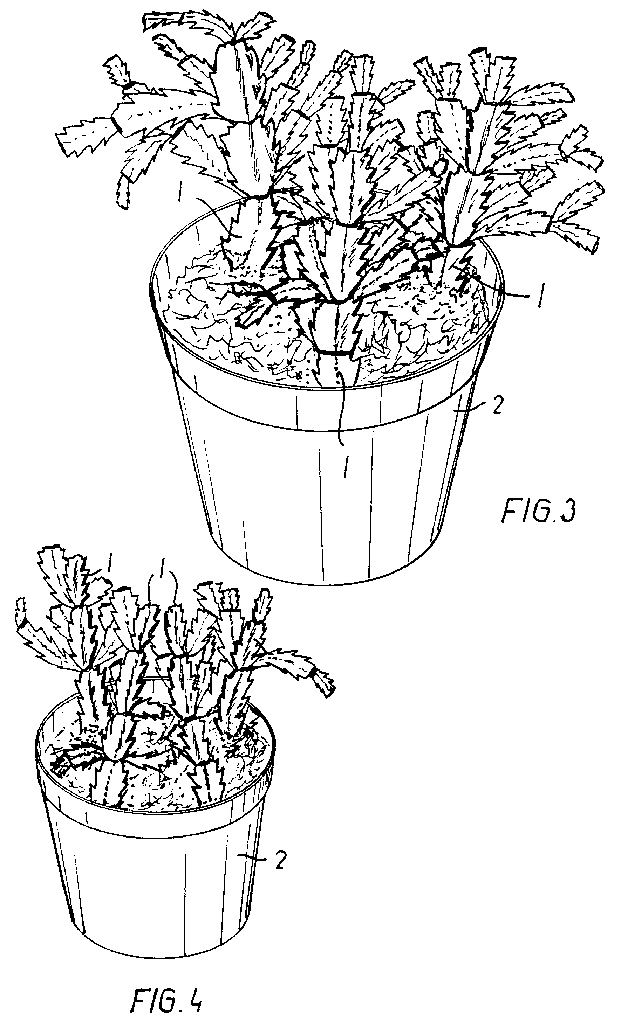

According to an embodiment of the invention, only a single cutting 1 is planted in each compartment 4 (cf. Figure 2) so that this cutting 1 has optimum space to grow. This way of planting appears at first sight not space effective. However, with only one cutting per compartment 4, the compartments can be smaller while still allowing the cutting more space than in the traditional method. In this way a tray of the same size can define more compartments compared with a tray as used when planting sets of three cuttings. Therefore, the cuttings can stay longer in the multiple-compartment tray, i.e. shorter in the space consuming sales pot. The overall effect is an increase in the amount of plants than can be propagated until a stage ready for sale for a certain amount of available area in for example a green house. There is thus an overcompensation, leading to a space advantage of the present method. After the phase in the multiple-compartment tray 3, the cuttings 1 are placed in sets of two or more cuttings 1 in the growing substrate of the sales pot 2 in such a way that they are spaced apart over the surface of the earth or growing substrate so that each cutting has maximum space to grow (cf. Figure 3).

Alternatively, the cuttings 1 can be planted directly in the growing substrate of the sales pot 2, without using a multiple-compartment tray 3.

Suitable growing substrates are for example peat, soil, compost, crushed mineral wool, perlite, vermiculite or bark.

In a preferred embodiment, the sets comprise 2 to 4 cuttings 1, and in an even more preferred embodiment the sets comprise 3 cuttings. The method is preferably used with Phyllocactus of the type of Schlumbergera, Rhipsalidopsis or Rhipsalis.

The mother plant can be a special plant for the purpose of providing cuttings, but also sales plants can be used to take cuttings from. The method is especially useful in combination with semi-automatic or automatic equipment to handle the different steps defined by the method. This equipment is used for example to fill the growing substrate in the tray or pot and to drill holes that receive the plant in the growing substrate spaced apart over the surface area of the growing substrate. Such equipment is in itself well-known in the art and will not be described in detail here.

## Claims

1. Method for propagating Phyllocacti comprising the steps of:
- providing cuttings (1) from a mother plant,
- providing a container, e.g. a sales pot (2), with growing substrate,
- planting the cuttings (1) in said container (2) in sets of at least two cuttings (1),
**characterized** by the step of.
- spacing apart the cuttings (1) of a set over the surface area of said growing substrate in the container (2)

2. Method of propagating Phyllocacti comprising the steps of:
- providing cuttings (1) from a mother plant,
- providing a multiple-compartment tray (3),
- planting said cuttings (1) in said multiple-compartment tray (3) followed by
- providing a container (2), e.g. a sales pot, with growing substrate,
- planting the cuttings (1) into said single container (2) in sets of at least two cuttings (1),
**characterized** by the steps of:
- planting only a single cutting (1) per compartment (4) of the multiple-compartment tray (3),
- spacing apart the cuttings (1) of a set over the surface area of said growing substrate in the single container (2).

3. Method according to claim 1 in which the cuttings have more than one leaf when they are planted.

4. Method according to any of claims 1-3, **characterized** by the sets comprising three cuttings.

5. Method according to claims 1-4, **characterized** in that the single container (2) is a sales pot.

6. Method according to claims 1-5, in which the growing substrate is peat, soil, compost, crushed mineral wool, perlite, vermiculite or bark.

7. Method according to claims 1-6, **characterized** by the Phyllocactus being a Schlumbergera or a Rhipsalidopsis or a Rhipsalis.

8. Method according to claims 1-7, **characterized** in that one or more of the steps are carried out by semi-automatic or automatic equipment.

## Patentansprüche

1. Verfahren zur Vermehrung von Phyllokakteen, umfassend die Schritte:
- Stecklinge (1) von einer Mutterpflanze bereitzustellen,
- ein Behältnis, z. B. einen Verkaufstopf (2), mit Wachstumssubstrat bereitzustellen,
- die Stecklinge (1) in Gruppen von mindestens zwei Stecklingen (1) in das Behältnis (2) zu pflanzen,
gekennzeichnet durch den Schritt
- die Stecklinge (1) einer Gruppe einzeln über die Oberfläche des Wachstumssubstrats im Behältnis (2) zu verteilen.

2. Verfahren zur Vermehrung von Phyllokakteen, umfassend die Schritte:
- Stecklinge (1) von einer Mutterpflanze bereitzustellen,
- einen Mehrfelder-Pflanztrog (3) bereitzustellen,
- die Stecklinge (1) in den Mehrfelder-Pflanztrog (3) zu pflanzen und anschließend
- ein Behältnis (2), z. B. einen Verkaufstopf, mit Wachstumssubstrat bereitzustellen,
- die Stecklinge (1) in Gruppen von mindestens zwei Stecklingen (1) in das Einzelbehältnis (2) zu pflanzen,
gekennzeichnet durch die Schritte:
- nur einen einzigen Steckling (1) je Feld (4) des Mehrfelder-Pflanztroges (3) zu pflanzen,
- die Stecklinge (1) einer Gruppe einzeln über die Oberfläche des Wachstumssubstrats im Einzelbehältnis (2) zu verteilen.

3. Verfahren nach Anspruch 1, wobei die Stecklinge mehr als ein Blatt haben, wenn sie gepflanzt werden.

4. Verfahren nach einem der Ansprüche 1 bis 3, dadurch gekennzeichnet, dass die Gruppen drei Stecklinge enthalten.

5. Verfahren nach einem der Ansprüche 1 bis 4, dadurch gekennzeichnet, dass das Einzelbehältnis (2) ein Verkaufstopf ist.

6. Verfahren nach einem der Ansprüche 1 bis 5, wobei das Wachstumssubstrat Torf, Erde, Kompost, zerkleinerte Mineralwolle, Perlit, Vermiculit oder Rinde ist.

7. Verfahren nach einem der Ansprüche 1 bis 6, dadurch gekennzeichnet, dass der Phyllokaktus eine Schlumbergera-, eine Rhipsalidopsis- oder eine Rhipsalis ist.

8. Verfahren nach einem der Ansprüche 1 bis 7, dadurch gekennzeichnet, dass einer oder mehrere der Schritte mit einer halbautomatischen oder automatischen Ausrüstung ausgeführt werden.

## Revendications

1. Méthode de multiplication de phyllocactus comprenant les étapes de :
- prélèvement de boutures (1) sur une plante mère,
- fourniture d'un conteneur, par exemple d'un pot destiné à la commercialisation (2), avec substrat de croissance,
- plantation des boutures (1) dans ledit conteneur (2) par groupes d'au moins deux boutures (1),
caractérisée par l'étape de
- l'espacement des boutures (1) d'un groupe à la surface dudit substrat de croissance dans le conteneur (2).

2. Méthode de multiplication de phyllocactus comprenant les étapes de:
- prélèvement de boutures (1) sur une plante mère,
- fourniture d'une clayette à plusieurs compartiments (3),
- plantation desdites boutures (1) dans ladite clayette à plusieurs compartiments (3) suivie de la
- fourniture d'un conteneur (2), par exemple d'un pot destiné à la commercialisation, avec substrat de croissance,
- plantation des boutures (1) dans ledit conteneur isolé (2) par groupes d'au moins deux boutures (1),
caractérisée par les étapes de
- la plantation uniquement d'une seule bouture (1) par compartiment (4) de la clayette à plusieurs compartiments (3),
- l'espacement des boutures (1) d'un groupe à la surface dudit substrat de croissance dans le conteneur isolé (2).

3. Méthode selon la revendication 1, dans laquelle les boutures ont plus d'une feuille quand elles sont plantées.

4. Méthode selon une quelconque des revendications 1 - 3, caractérisée en ce que les groupes comprennent trois boutures.

5. Méthode selon les revendications 1 - 4 caractérisée en ce que le conteneur isolé (2) est un pot destiné à la commercialisation.

6. Méthode selon les revendications 1 - 5, dans laquelle le substrat de croissance est de la tourbe, de la terre, du compost, de la laine minérale broyée, de la perlite, de la vermiculite ou de l'écorce.

7. Méthode selon les revendications 1 - 6, caractérisée en ce que le phyllocactus est un Schlumbergera ou un Rhipsalidopsis ou un Rhipsalis.

8. Méthode selon les revendications 1 - 7, caractérisée en ce qu'une ou plusieurs étapes sont mises en oeuvre avec un équipement semi-automatique ou automatique.
